# FASCICULE DE BREVET EUROPEEN

(11) **EP 0 391 806 B1**
(45) Date de publication et mention de la délivrance du brevet: **20.10.1993**
(21) Numéro de dépôt: 90400936.2
(22) Date de dépôt: 05.04.1990
(51) Int. Cl.: B67D 5/04

(54) **Poste de chargement de véhicules en produits petroliers**
Anlage zum Befüllen von Fahrzeugen mit Erdölprodukten
Loading station of petroleum products for vehicles

(30) Priorité: 06.04.1989 FR 8904524
(43) Date de publication de la demande: 10.10.1990
(73) Titulaire: ALMA INGENIERIE, F-94470 Boissy-Saint-Leger (FR)
(72) Inventeur: Aubin, Claude, F-91540 Mennecy (FR)
(74) Mandataire: Weinmiller, Jürgen

(56) Documents cités:
- EP-A- 0 030 509
- FR-A- 1 244 653
- US-A- 1 472 413
- US-A- 3 786 837

## Description

La présente invention concerne un poste de chargement de véhicules en produits pétroliers.

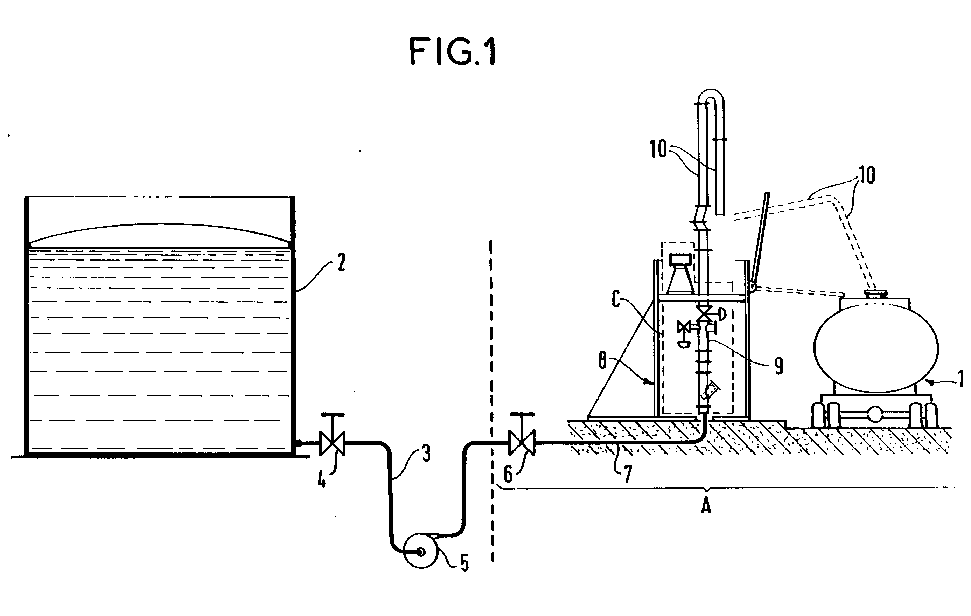

La figure 1 annexée, représente un poste A de chargement en pétrole d'un camion citerne 1, relié à un réservoir de stockage 2 par une conduite 3. A la sortie du réservoir 2, la conduite 3 comporte une vanne 4 d'isolement du réservoir de stockage puis une pompe de transfert 5.

La pompe de transfert 5 alimente ensuite en parallèle plusieurs postes de chargement tels que A. Chaque poste comporte une vanne 6 d'isolement suivie d'une canalisation coudée 7 d'amenée du produit conduisant à la passerelle de chargement 8 et à l'extrémité de laquelle sont reliés les équipements de chargement, et comprenant une tubulure verticale de chargement 9 suivie d'une canne mobile de chargement 10.

Sur la figure, la canne 10 est figurée en traits pointillés en position de chargement.

La tubulure verticale de chargement 9 comporte tous les équipements nécessaires au chargement : vanne, compteur et dispositif de purge.

La présente invention se situe précisément dans cette partie repérée C du poste de chargement 1, c'est-à-dire concerne la tubulure verticale de chargement 9 et ses équipements. Ce qui est représenté en dehors de cette partie C fait partie de l'état de la technique.

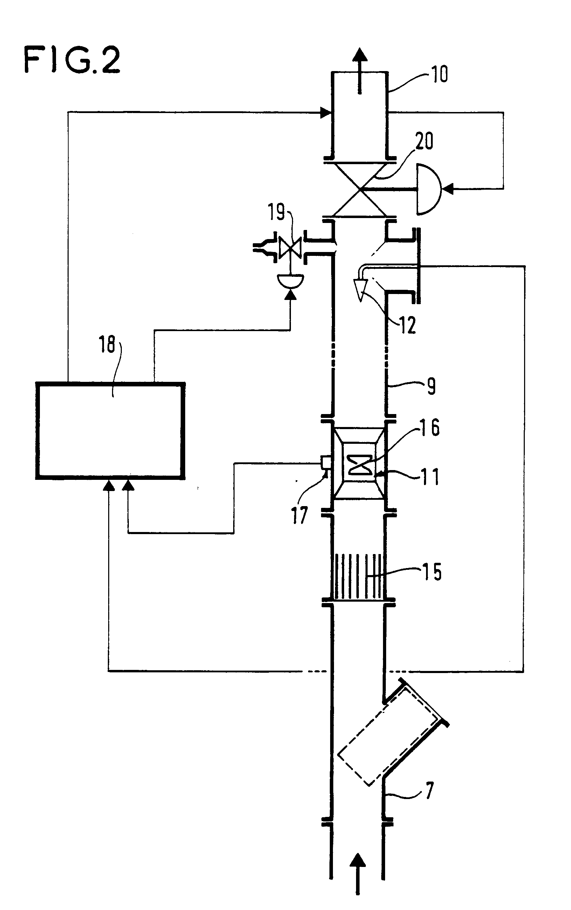

La partie C de la figure 1 a été représentée succinctement, mais conformément à l'invention, et est détaillée dans la figure 2.

Un art antérieur connu de la partie C consiste en une tubulure verticale comportant une portion intermédiaire de raccordement entre la partie basse de la tubulure et la partie haute, cette portion intermédiaire étant munie d'un filtre purgeur du type à capacité de rétention et d'un compteur volumétrique à palettes. Ces deux organes sont volumineux, et donc disposés de part et d'autre de la tubulure verticale. Le circuit d'écoulement est le suivant : le pétrole arrive par la partie basse de la tubulure, passe dans la portion intermédiaire de raccordement qui conduit le fluide vers le filtre purgeur, ressort du filtre purgeur et revient dans la portion de raccordement qui conduit le fluide vers le compteur volumétrique à palettes, en fait le tour complet et revient dans la portion de raccordement, traverse une vanne d'autorisation d'écoulement et atteint enfin la partie supérieure de la tubulure verticale qui est coaxiale avec la partie inférieure, grâce à la portion intermédiaire de raccordement.

Dans ce système, le circuit hydraulique est compliqué puisqu'il fait plusieurs détours pour traverser successivement le filtre purgeur et le compteur volumétrique, la portion de raccordement assurant d'une part la continuité hydraulique lors de ces divers cheminements du fluide, et d'autre part la liaison mécanique coaxiale de la partie inférieure et supérieure de la tubulure. En outre, ces deux organes : filtre purgeur et compteur sont très volumineux et situés, comme on l'a dit, de part et d'autre de la tubulure.

La présente invention a pour but de proposer un ensemble moins encombrant, plus simple dans sa structure, et plus fiable.

L'invention a ainsi pour objet un poste de chargement de véhicules en produits pétroliers comprenant une tubulure verticale de chargement reliée à l'une de ses extrémités à une canalisation d'amenée, munie d'une vanne d'isolement et à son autre extrémité, pourvue d'une vanne d'autorisation, à une canne mobile de chargement, caractérisé en ce que ladite tubulure verticale comporte en son intérieur un débitmètre à turbine suivi, à quelque distance en aval, d'une sonde détectrice gaz/liquide associée à une électrovanne latérale de purge, et en ce qu'un calculateur reçoit des signaux d'information dudit débitmètre et de ladite sonde et fournit des signaux de commande à ladite vanne d'autorisation et à ladite électrovanne de purge.

On va maintenant donner la description d'un exemple particulier de mise en oeuvre de l'invention en se référant au dessin annexé dans lequel :

La figure 1, déjà décrite, représente un schéma d'ensemble d'implantation d'un poste de chargement de véhicules en produits liquides d'hydrocarbures selon l'invention, avec le réservoir de stockage et la conduite reliant le réservoir au poste. L'invention peut être utilisée également sur un poste de chargement en source.

La figure 2 représente en vue agrandie, la partie C du poste A, où se situent les aménagements de l'invention.

Le but général de la tubulure verticale de chargement 9 est, bien entendu, de faire la liaison entre la canalisation d'amenée 7 et la canne mobile de chargement 10, qui est située en extrémité et qui doit plonger dans le véhicule 1 pour son remplissage. Cette tubulure verticale 9 doit comporter comme il a été dit plus haut des moyens pour mesurer le volume du liquide délivré, des moyens pour purger la conduite d'éventuelles poches de gaz, et une vanne d'autorisation d'écoulement du produit. En outre, il faut que les moyens de mesure du volume délivré soient capables de distinguer le passage éventuel d'une poche de gaz afin de ne pas la comptabiliser comme volume liquide délivré.

Le système de purge est nécessaire car, en effet, à cause des différences de températures entre le jour et la nuit, pendant laquelle le poste est au repos, il se produit des contractions du volume du produit dans la tubulure 9 qui est ainsi partiellement remplie de gaz le matin lors du premier remplissage d'un camion citerne.

Si l'installation générale, jusqu'au réservoir 2, comporte des points hauts dans la conduite 3 où dans les canalisations d'amenée 7 aux divers postes A, il peut également se produire des poches de gaz dans ces points hauts qui ne s'évacuent pas au démarrage du poste, mais plus tard au cours de l'écoulement.

L'installation représentée sur la figure 2 correspond au cas où elle comporte les moyens nécessaires pour la détection et l' évacuation de poches de gaz, non seulement au démarrage du poste, mais également survenant au cours de l'écoulement.

Ainsi, en se reportant à la figure 2, la tubulure verticale de chargement 9 est équipée d'un débitmètre à turbine 11, d'une première sonde détectrice gaz/liquide 12 située à quelque distance en aval du débitmètre 11, cette distance étant au moins égale à cinq fois la valeur du diamètre de la tubulure 9. Un tranquiliseur d'écoulement 15 précède le débitmètre 11. Ce tranquiliseur est constitué par un faisceau de tubes, et a pour rôle de briser les effets de rotation des veines fluides.

La sonde 12 est un détecteur à fibre optique. Le débitmètre à turbine 11 comprend une turbine ou hélice 16 qui est entraîné par le fluide à une vitesse proportionnelle à son débit. Autour de l'hélice, qui porte un aimant, est placé un solénoïde 17. Le passage des pales de l'hélice induit dans le solénoïde un courant dont la fréquence est proportionnelle à la vitesse de rotation de l'hélice.

Les signaux fournis par la sonde 12 et par le débitmètre 11, sont traités par un calculateur 18.

Pour permettre l'évacuation des poches de gaz, une électrovanne latérale de purge 19 est associée à la première sonde 12, l'ensemble étant situé dans une manchette en T faisant partie de la tubulure verticale 9. Enfin, après la sonde 12 et l'électrovanne 19, la tubulure verticale 9 est munie d'une vanne d'autorisation 20. L'électrovanne de purge 19 et la vanne d'autorisation 2 sont commandées par le calculateur 18.

L'électrovanne de purge 19, de petite dimension, a un temps de réponse faible qui est au maximum de 0,5 seconde, tandis qu'au contraire la vanne d'autorisation 20, assez grosse, a au contraire un temps de réponse assez long pouvant atteindre cinq secondes au maximum.

Le calculateur 18 gère l'ensemble : il traite les informations fournies par la sonde 12 et par le débitmètre 11, commande l'ouverture et la fermeture de la vanne d'autorisation 20 et de l'électrovanne 19, et enfin, il visualise le volume liquide délivré au véhicule 1.

Le fonctionnement est le suivant :

La pompe 5 est mise en service, la ligne est sous pression, les vannes 20 et 19 sont fermées. Si une poche de gaz s'est formée lors de l'arrêt de l'installation, l'ensemble de la tubulure verticale 9 peut être partiellement ou totalement vide de liquide. Le gaz se comprime et traverse le débitmètre 11 qui tourne. Cependant, comme la sonde 12 est en zone sèche, la vanne d'autorisation 20 est maintenue fermée par le calculateur 19, qui d'autre part ne tient pas compte du signal émis par le débitmètre 11. L'autorisation d'ouverture de la vanne 20 n'est donnée que si la sonde 12 est mouillée.

Le calculateur a commandé l'ouverture de l'électrovanne de purge 19, la poche de gaz s évacue et lorsque la sonde 12 est mouillée, le calculateur 18 commande la fermeture de l'électrovanne 19, vérifie l'arrêt du signal du débitmètre 11 pendant au moins dix secondes, puis autorise ensuite l'ouverture de la vanne 20. Pendant toute la durée d'ouverture de la vanne 20, le signal du débitmètre 11 est comptabilisé par le calculateur 18.

Si une poche de gaz arrive au cours de l'écoulement, elle est détectée par la sonde 12. Aussitôt, le calculateur 18 commande la fermeture de la vanne 20, et s'arrête de comptabiliser le signal du débitmètre 11. Lorsque la vanne 20 est complètement fermée, et qu'il y a absence de signal en provenance du débitmètre pendant au moins dix secondes, le calculateur commande l'ouverture de l'électrovanne 19 permettant ainsi l'élimination de la poche de gaz. Dans cette phase du fonctionnement, le calculateur ne comptabilise pas le signal du débitmètre 11. Dès que la sonde 12 est mouillée, le calculateur ordonne la fermeture de l'électrovanne de purge 19, vérifie que le débitmètre 11 ne fournit aucun signal, puis commande l'ouverture de la vanne d'autorisation 20, et recomptabilise les signaux émis par le débitmètre.

Comme on le voit, le volume de gaz comptabilisé par le débitmètre 11 avant d'être détecté par la sonde 12, est compensé par le volume de liquide qui n'est pas comptabilisé lors de la remise en condition de la ligne (séquence de purge des gaz).

Comme on le voit, le dispositif de mesure de débit, interne à la tubulure verticale 9, ainsi que le dispositif de détection et d'évacuation des poches de gaz constitué par une sonde interne à fibre optique et une simple vanne latérale, permet de réduire beaucoup l'encombrement latéral de l'ensemble.

En outre, l'utilisation d'un débitmètre à turbine permet éventuellement le chargement, même si la turbine est bloquée, ce qui n'est pas le cas actuellement avec un compteur volumétrique à palettes.

Le système est en ligne, et donc d'un montage aisé et avec peu de pertes de charge.

Le système, commandé par un calculateur, peut détecter facilement tout défaut, et organiser des procédures qui en tiennent compte, permettant ainsi de ne pas avoir d'erreur due aux éventuelles poches de gaz.

## Revendications

1. Poste de chargement de véhicules (1) en produits pétroliers comprenant une tubulure verticale de chargement (9) reliée à l'une de ses extrémités à une canalisation d'amenée (7) munie d'une vanne d'isolement (6) et à son autre extrémité, pourvue d'une vanne d'autorisation (20), à une canne mobile de chargement (10), caractérisé en ce que ladite tubulure verticale (9) comporte en son intérieur un débitmètre à turbine (11) suivi à quelque distance en aval d'une sonde détectrice gaz/liquide (12), associée à une électrovanne latérale de purge (19), et en ce qu'un calculateur (18) reçoit des signaux d'information dudit débitmètre (11) et de ladite sonde (12) et fournit des signaux de commande à ladite vanne d'autorisation (20) et à ladite électrovanne de purge (19).

2. Poste de chargement selon la revendication 1, caractérisé en ce qu'un dispositif tranquiliseur d'écoulement (15) est disposé dans la tubulure verticale de chargement (9), avant ledit débitmètre à turbine (11).

## Patentansprüche

1. Station zum Befüllen von Tankfahrzeugen (1) mit Erdölprodukten mit einer senkrechten Füll-Rohrleitung (9), die an einem ihrer Enden mit einer Zufuhrleitung (7) mit einem Isolierventil (6) und an ihrem anderen, mit einem Freigabeventil (20) versehenen Ende mit einem beweglichen Füllstutzen (10) verbunden ist, dadurch gekennzeichnet, daß die senkrechte Rohrleitung (9) in ihrem Inneren einen Turbinen-Durchsatzmesser (11) aufweist, der in einigem Abstand stromabwärts von einer Sonde zur Gas/Flüssigkeitserfassung (12) gefolgt wird, die einem seitlichen Reinigungs-Elektroventil (19) zugeordnet ist, und daß ein Rechner (18) Informationssignale von dem Durchsatzmesser (11) und der Sonde (12) empfängt und Steuersignale an das Freigabeventil (20) und das Reinigungs-Elektroventil (19) liefert.

2. Füllstation nach Anspruch 1, dadurch gekennzeichnet, daß ein Strömungsberuhigungsorgan (15) in der senkrechten Füll-Rohrleitung (9) vor dem Turbinen-Durchsatzmesser (11) angeordnet ist.

## Claims

1. A loading station (1) for loading petroleum products into vehicles, said loading station including a vertical loading tube (9), one end of the tube being connected to a feed duct (7) equipped with an isolation valve (6), and the other end, which is provided with a control valve (20), being connected to a moving loading pipe (10), said loading station being characterized in that said vertical tube (9) contains a spinner flow-meter (11) followed, at some distance downstream therefrom, by a gas/liquid detection probe (12) associated with a side bleed solenoid valve (19), and in that a computer (18) receives data signals from said flow-meter (11), and from said probe (12), and supplies control signals to said control valve (20) and to said bleed solenoid valve (19).

2. A loading station according to claim 1, characterized in that a baffle device (15) is disposed inside the vertical loading tube (9), preceding said spinner flow-meter (11).
